# EUROPEAN PATENT APPLICATION

(11) **EP 4 756 085 A1**
(43) Date of publication of application: **10.06.2026**
(21) Application number: 25806491.4
(22) Date of filing: 08.01.2025
(51) Int. Cl.: C25D 17/00, C25D 7/12

(54) **HORIZONTAL ELECTROPLATING APPARATUS FOR SOLAR CELL**

(30) Priority: 23.05.2024 CN 202410652028
(71) Applicant: Tianjin Aiko Solar Energy Technology Co., Ltd., Tianjin 300400 (CN); Guangdong Aiko Solar Energy Technology Co., Ltd., Foshan, Guangdong 528000 (CN); Zhejiang Aiko Solar Energy Technology Co., Ltd., Yiwu, Jinhua Zhejiang 322000 (CN); Zhuhai Fushan Aiko Solar Energy Technology Co., Ltd., FushanIndustrial Park, Doumen District Zhuhai Guangdong 519000 (CN); Shenzhen Aiko Digital Energy Technology Co., Ltd., Shenzhen, Guangdong 518000 (CN)
(72) Inventor: ZHU, Wei, Jinhua, Zhejiang 322000 (CN); WANG, Yongqian, Jinhua, Zhejiang 322000 (CN)
(74) Representative: EP&C
(86) International application number: PCT/CN2025/071353
(87) International publication number: WO 2025/241550

(57) **Abstract**

The present disclosure is applicable to the technical field of electroplating solar cells, and provides horizontal electroplating equipment for a solar cell plate. A plurality of electroplating baths are successively arranged in the horizontal electroplating equipment at intervals in a horizontal direction, and include first side walls and second side walls opposite to the first side walls in the horizontal direction. The solar cell plate remains in contact with at least one cathode structure in an electroplating process. In the horizontal direction, a spacing between the first side wall of the M^{th} electroplating bath and the first side wall of the (M+1)^{th} electroplating bath is less than a length of the solar cell plate, and a spacing between the first side wall of the M^{th} electroplating bath and the second side wall of the (M+1)^{th} electroplating bath is greater than the length of the solar cell plate. As such, the solar cell plate can be in contact with the at least one cathode structure regardless of a state of the solar cell plate, enabling continuous electroplating. In addition, in the electroplating process, the number of the electroplating baths covered by the solar cell plate is less than 2, which can improve the electroplating efficiency of a single electroplated region while reducing the cost and the failure rate.

## Description

### CROSS-REFERENCE TO RELATED APPLICATIONS

The present disclosure claims the priority of Chinese patent application entitled "Horizontal Electroplating Equipment for Solar Cell Plate" submitted on May 23, 2024, with the application number of 202410652028.7, the entire contents of which are incorporated herein by reference.

### TECHNICAL FIELD

The present disclosure relates to the technical field of electroplating solar cells, and particularly to horizontal electroplating equipment for a solar cell plate.

### BACKGROUND

In general, a metal electrode of a solar cell plate may be fabricated by using an electroplating method in a process of fabricating the solar cell plate. Three approaches may be employed: horizontal electroplating, vertical electroplating and insert electroplating during electroplating, wherein the horizontal electroplating is more suitable for large-scale production.

In the related art, a plurality of electroplating baths are generally arranged in horizontal electroplating equipment for electroplating the solar cell plate multiple times, such that the thickness of the metal electrode of the solar cell plate can achieve the desired performance. However, existing horizontal electroplating equipment is complex in structure, and high in cost and failure rate.

### SUMMARY

The present disclosure provides horizontal electroplating equipment for a solar cell plate, which is high in electroplating efficiency, simple in structure, and low in cost and failure rate.

The present disclosure is achieved in such a way that the horizontal electroplating equipment for the solar cell plate according to an embodiment of the present disclosure includes:
a number of electroplating baths arranged at intervals in a horizontal direction and including first side walls and second side walls opposite to the first side walls at intervals along the horizontal direction;
conveying devices arranged within the electroplating baths and configured to carry and transport the solar cell plate along the horizontal direction;
anode structures arranged within the electroplating baths;
a number of cathode structures arranged outside the electroplating baths, wherein the solar cell plate remains in contact with at least one of the cathode structures in an electroplating process; and
wherein a spacing between the first side wall of the M^{th} electroplating bath and the first side wall of the (M+1)^{th} electroplating bath is less than a length of the solar cell plate, and a spacing between the first side wall of the M^{th} electroplating bath and the second side wall of the (M+1)^{th} electroplating bath is greater than the length of the solar cell plate, wherein M is a positive integer.

In some embodiments, a number of the cathode structures and a number of the electroplating baths are alternately successively disposed along the horizontal direction; and in the horizontal direction, a spacing between the Nth cathode structure and the (N+1)^{th} cathode structure is less than the length of the solar cell plate, wherein N is a positive integer.

In some embodiments, a spacing between side walls of the first side walls and the second side walls closest to the cathode structures and the cathode structures ranges from 1mm to 20mm.

In some embodiments, the cathode structures include cathode wheels, wherein the cathode wheels and the conveying devices are positioned on one side of the solar cell plate facing the electroplating baths, the cathode wheels are configured to carry the solar cell plate together with the conveying devices, the cathode wheels are in contact with the solar cell plate and are connected to a cathode of an external power supply, and in the horizontal direction, a spacing between axle centers of the N cathode wheel and the (N+1)^{th} cathode wheel is less than the length of the solar cell plate.

In some embodiments, the cathode wheels have a diameter of 30mm to 40mm.

In some embodiments, in the horizontal direction, a distance between supporting points between the conveying devices and the solar cell plate closest to the cathode wheels and axle centers of the cathode wheels is less than or equal to half of the length of the solar cell plate.

In some embodiments, the number of the electroplating baths is greater than two, and no cathode structures are provided between some adjacent ones of electroplating baths in the horizontal electroplating equipment.

In some embodiments, the anode structures include anode plates, wherein the anode plates are provided with through grooves thereon, and at least one portion of each of the conveying devices is in contact with the solar cell plate through the through grooves, enabling the conveying device to carry and transport the solar cell plate along the horizontal direction.

In some embodiments, the conveying devices include drive shafts and drive wheels, wherein the drive shafts are rotatably installed on the electroplating baths, the drive wheels are arranged on the drive shafts and positioned within the electroplating baths, the drive wheels are in contact with the solar cell plate through the through grooves and are rotatably positioned within the through grooves, the drive wheels are configured to carry the solar cell plate, and the drive shafts are configured to drive the drive wheels to rotate to transport the solar cell plate.

In some embodiments, in a vertical direction, a distance between supporting points where the conveying devices are in contact with the solar cell plate and the anode plates is less than or equal to 10mm.

In some embodiments, in the vertical direction, the distance between the supporting points where the conveying devices are in contact with the solar cell plate and the anode plates is greater than 5mm and less than or equal to 10mm.

In some embodiments, a plurality of the drive wheels are arranged on the drive shafts, disposed at intervals along axial directions of the drive shafts, and are in one-to-one correspondence to the through grooves.

In some embodiments, a plurality of the drive shafts are arranged within the electroplating baths, a plurality of the drive shafts are arranged at intervals along the horizontal direction, and the drive wheels on at least two ones of the drive shafts are misaligned with each other in the horizontal direction.

In the horizontal electroplating equipment for the solar cell plate according to embodiments of the present disclosure, the plurality of electroplating baths are successively arranged at intervals in the horizontal direction, and include the first side walls and the second side walls opposite to the first side walls in the horizontal direction. The solar cell plate remains in contact with at least one of the cathode structures in the electroplating process. In the horizontal direction, the spacing between the first side wall of the M^{th} electroplating bath and the first side wall of the (M+1)^{th} electroplating bath is less than the length of the solar cell plate, and the spacing between the first side wall of the M^{th} electroplating bath and the second side wall of the (M+1)^{th} electroplating bath is greater than the length of the solar cell plate. As such, on the one hand, the solar cell plate can be in contact with the at least one cathode structure regardless of a state of the solar cell plate as the solar cell plate travels in the electroplating process of the solar cell plate, so as to achieve the continuous electroplating and improve the electroplating efficiency. On the other hand, since the spacing between the first side wall of the M^{th} electroplating bath and the second side wall of the (M+1)^{th} electroplating bath is greater than the length of the solar cell plate, the number of the electroplating baths covered by the solar cell plate is less than 2 in the electroplating process, which can improve the electroplating efficiency of a single electroplated region. Moreover, in such a case, the number of the electroplating baths can be set to be fewer in assembly lines of the same length, which can simplify the structure of the equipment and reduce the cost and the failure rate.

Additional aspects and advantages of the present disclosure will be partially presented in the description below, will partially become apparent from the description below, or will be known through the practice of the present disclosure.

### BRIEF DESCRIPTION OF DRAWINGS

Fig. 1 is a schematic diagram showing a structure of horizontal electroplating equipment according to an embodiment of the present disclosure;
Fig. 2 is a schematic diagram showing a structure of a portion of horizontal electroplating equipment according to an embodiment of the present disclosure;
Fig. 3 is a schematic diagram showing a structure of an anode structure according to an embodiment of the present disclosure;
Fig. 4 is a schematic diagram showing an assembly structure between anode structures and conveying devices according to an embodiment of the present disclosure;
Fig. 5 is a schematic diagram showing another assembly structure between anode structures and conveying devices according to an embodiment of the present disclosure;
Fig. 6 is a schematic diagram showing a further assembly structure between anode structures and conveying devices according to an embodiment of the present disclosure; and
Fig. 7 is a schematic diagram showing structures of conveying devices according to an embodiment of the present disclosure.

Description of reference symbols of main components:
100: horizontal electroplating equipment; 10: electroplating bath; 11: first side wall; 12: second side wall; 20: conveying device; 21: drive shaft; 22: drive wheel; 221: rotating shaft portion; 222: blade portion; 30: anode structure; 31: through groove; 32: through hole; 40: cathode structure; 41: cathode wheel; 50: electroplating solution surging device; and
200: solar cell plate.

### DETAILED DESCRIPTION OF EMBODIMENTS

In order to make the objectives, technical solutions and advantages of the present disclosure clearer, the present disclosure will be further described in detail below with reference to accompanying drawings and embodiments. The embodiments described below with reference to the accompanying drawings are exemplary, are provided merely for the purpose of illustrating the present disclosure, and should not be construed as a limitation to the present disclosure. Further, it should be understood that the specific embodiments described herein are merely used for describing the present disclosure rather than limiting the present disclosure.

In the description of the present disclosure, it should be understood that orientational or positional relationships indicated by terms "horizontal", "vertical" and the like are based on orientational or positional relationships shown in the accompanying drawings, are only for the purpose of facilitating the description of the present disclosure and simplifying the description, but are not intended to indicate or imply that the device or component referred to must have a particular orientation or be constructed and operated in a particular orientation. Therefore, such terms should not be construed as a limitation to the present disclosure.

In addition, terms "first" and "second" are used for a descriptive purpose only and should not be construed as indicating or implying relative importance or implying a quantity of technical features indicated. Thereby, a feature defined by "first" or "second" may explicitly or implicitly include one or more of such features. In the description of the present disclosure, "a plurality of" or "a number of" mean two or more, unless otherwise explicitly and particularly defined.

In the description of the present disclosure, it should be noted that, unless otherwise explicitly specified or defined, terms such as "install", "connect" and "connection" shall be construed broadly. For example, they may be a fixed connection, a detachable connection, or an integral connection; they may be a mechanical connection, an electrical connection or a mutual communication; and they can be a direct connection or an indirect connection via an intermediate medium, and they can be an internal communication between two components or an interaction relationship between the two components. Specific meanings of the above terms in the present disclosure may be understood depending on specific circumstances for those ordinarily skilled in the art.

In the present disclosure, unless otherwise expressly specified or defined, a first feature being "on" or "under" a second feature may involve the first feature being in contact with the second feature, or the first feature is not in direct contact with the second feature but rather is in contact with the second feature through a further feature therebetween. Moreover, the first feature being "on", "above", and "over" the second feature involves the first feature being directly above and obliquely above the second feature, or simply indicates that the first feature is horizontally higher than the second feature. The first feature being "under", "below" and "underneath" the second feature involves the first feature being directly below and obliquely below the second feature, or simply indicates that the first feature is horizontally lower than the second feature.

The description below provides a number of different embodiments or examples to implement different structures of the present disclosure. In order to simplify the description of the present disclosure, parts and settings of specific examples will be described below. Certainly, they are only examples and are not intended to limit the present disclosure. In addition, reference numbers and/or reference letters may be repeated in different examples of the present disclosure, and such a repetition is for the purposes of simplification and clarity and does not in itself indicate the relationship between various embodiments and/or settings in question. Further, although the present disclosure provides examples of various specific processes and materials, applications of other processes and/or use scenarios of other materials can occur in those ordinarily skilled in the art.

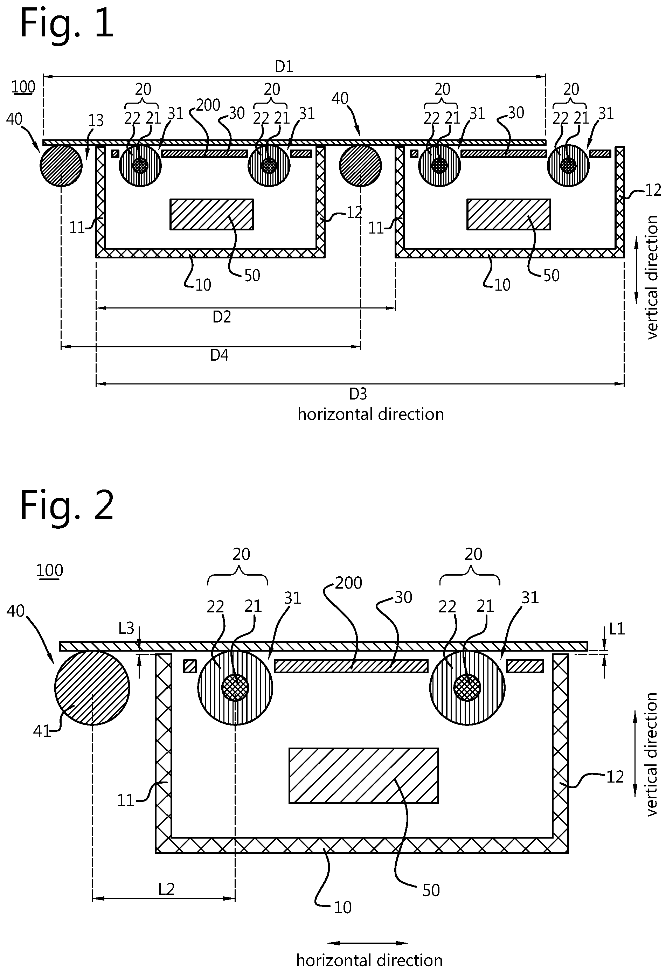

Referring to Fig. 1, an embodiment of the present disclosure provides horizontal electroplating equipment 100 configured to electroplate a to-be-electroplated region on a solar cell plate 200. For example, the horizontal electroplating equipment 100 can be configured to electroplate a seed layer on a grid line region of the solar cell plate 200 so as to form a metal grid line electrode.

The horizontal electroplating equipment 100 in this embodiment of the present disclosure may include a number of electroplating baths 10, a number of conveying devices 20, a number of anode structures 30 and a number of cathode structures 40.

As shown in Fig. 1, a number of the electroplating baths are arranged at intervals along a horizontal direction and configured to hold electroplating solutions. The electroplating baths 10 include first side walls 11 and second side walls 12 opposite to the first side walls 11 at intervals along the horizontal direction. The conveying devices 20 are arranged within the electroplating baths 10. The conveying devices 20 are configured to carry and transport the solar cell plate 200, such that the solar cell plate 200 passes above the electroplating baths 10. Each of the electroplating baths is internally provided with at least one conveying device 20. It should be noted that in some embodiments, the electroplating solutions in a number of the electroplating baths 10 can be the same or different. An electroplated layer can be enabled to reach the desired thickness in a continuous electroplating manner when the electroplating solutions in a number of the electroplating baths 10 are the same. Different electroplated layers can be successively electroplated on the to-be-electroplated region when the electroplating solutions in a number of the electroplating baths 10 are different. For instance, in an example, a copper layer can be electroplated first, followed by a protective layer, such as one or more of tin, nickel and silver, which effectively prevents the copper layer from being oxidized.

The anode structures 30 are arranged within the electroplating baths 10, and each of the electroplating baths 10 is internally provided with the anode structure 30. The cathode structures 40 are disposed outside the electroplating baths 10. The solar cell plate 200 remains in contact with at least one of the cathode structures 40 in an electroplating process.

As shown in Fig. 1, in the horizontal electroplating equipment 100, a spacing D2 between the first side wall 11 of the M^{th} electroplating bath 10 and the first side wall 11 of the (M+1)^{th} electroplating bath 10 is less than a length D1 of the solar cell plate, and a spacing D3 between the first side wall 11 of the M^{th} electroplating bath 10 and the second side wall 12 of the (M+1)^{th} electroplating bath 10 is greater than the length D1 of the solar cell plate. That is, D2 is less than D1, D3 is greater than D1, and M is a positive integer.

It should be understood that in the horizontal electroplating equipment 100, the anode structures 30 are connected to an anode of an external power supply while the cathode structures 40 are connected to a cathode of the external power supply. A circuit loop is formed by the anode structures 30, the electroplating solutions, a to-be-electroplated portion in the solar cell plate 200 (such as a seed layer on the grid line region) and the cathode structures 40 in a sequence in an electroplating process, thereby electroplating a to-be-electroplated region of the solar cell plate 200.

It should be noted that in the electroplating process, a non-electroplated region of the solar cell plate 200 is generally provided with a mask. Only the to-be-electroplated region is exposed from the mask. The cathode structures 40 being in contact with the solar cell plate 200 can involve the cathode structures 40 being in direct electrical contact with the to-be-electroplated region, or the cathode structures 40 being in contact with the mask. The cathode structures 40 are in electrical contact with the to-be-electroplated region by the electroplating solutions attached to the solar cell plate 200, which is not particularly defined herein.

A number of the electroplating baths 10 are successively arranged in the horizontal electroplating equipment 100 according to this embodiment of the present disclosure at intervals in the horizontal direction, and include the first side walls 11 and the second side walls 12 opposite to the first side walls 11 in the horizontal direction. the solar cell plate 200 remains in contact with at least one of the cathode structures 40 in the electroplating process. In the horizontal direction, the spacing D2 between the first side wall 11 of the M^{th} electroplating bath 10 and the first side wall 11 of the (M+1)^{th} electroplating bath 10 is less than the length D1 of the solar cell plate, and the spacing D3 between the first side wall 11 of the M^{th} electroplating bath 10 and the second side wall 12 of the (M+1)^{th} electroplating bath 10 is greater than the length of the solar cell plate 200. As such, on the one hand, the solar cell plate 200 can be in contact with the at least one cathode structure 40 regardless of a state of the solar cell plate 200 as the solar cell plate 200 travels in the electroplating process of the solar cell plate 200, so as to achieve the continuous electroplating and improve the electroplating efficiency. On the other hand, since the spacing D3 between the first side wall 11 of the M^{th} electroplating bath 10 and the second side wall 12 of the (M+1)^{th} electroplating bath 10 is greater than the length D1 of the solar cell plate 200, the number of the electroplating baths 10 covered by the solar cell plate 200 is less than 2 in the electroplating process, which can improve the electroplating efficiency of a single electroplated region. Moreover, in such a case, the number of the electroplating baths 10 can be set to be fewer in assembly lines of the same length, which can simplify the structure of the equipment and reduce the cost and the failure rate.

Particularly, in embodiments of the present disclosure, Fig. 2 shows a structure of a portion of horizontal electroplating equipment 100. In embodiments of the present disclosure, the anode structures 30 may be anode plates which can be parallelly spaced from the solar cell plate 200 in a vertical direction. The horizontal direction refers to a travelling direction of the solar cell plate 200 in the electroplating process, that is, a transporting direction of the conveying devices 20. The vertical direction is a direction perpendicular to the horizontal direction, which is a direction pointed by gravity. As an example, in Fig. 2, the vertical direction refers to a height direction of the electroplating baths 10, that is, a direction perpendicular to a surface of the solar cell plate 200 facing the electroplating baths 10. The conveying devices 20 can be assemblies with conveying wheels, with capabilities of carrying and transporting the solar cell plate 200, which is not particularly limited herein. The anode structures 30 can be a titanium mesh, which is not particularly limited herein.

It should be understood that the electroplating baths 10 are filled with the electroplating solutions in the electroplating process. The electroplating solutions are adsorbed on a surface of the solar cell plate 200 facing the electroplating baths 10. Accordingly, the circuit loop is formed by the anode structures 30, the electroplating solutions, the to-be-electroplated portion (such as a metal electrode) in the solar cell plate 200 and the cathode structures 40 in a sequence.

It should be noted that in embodiments of the present disclosure, the solar cell plate 200 can be for example a PERC solar cell plate, a Topcon solar cell plate, a heterojunction solar cell plate, and a back-contact solar cell plate, which is not particularly limited herein.

As shown in Fig. 1 and Fig. 2, in the horizontal electroplating equipment 100 of embodiments of the present disclosure, the first side wall 11 and the second side wall 12 of the electroplating bath 10 are two side walls of the electroplating bath 10 facing each other in the horizontal direction, and the first side wall 11, the second side wall 12, side walls in two further directions, and a bottom wall are enclosed into a cavity for holding the electroplating solutions. In a number of the electroplating baths 10, the first side walls 11 and the second side walls 12 are alternately successively arranged at intervals along the horizontal direction. A spacing between two adjacent first side walls 11 is less than the length of the solar cell plate 200 in the horizontal direction, and a spacing between the first side wall 11 of the previous electroplating bath 10 and the second side wall 12 of the latter electroplating bath 10 is greater than the length of the solar cell plate 200 in the horizontal direction. In this way, by reasonably setting the spacing between the side walls of the individual electroplating bath, in the electroplating process, it is possible for the solar cell plate 200 to correspond to more than one electroplating bath 10 in the electroplating process without covering two electroplating baths 10. For example, taking three electroplating baths as an example, the solar cell plate 200 covers the first electroplating bath 10 while covering a part of the second electroplating bath 10 in the electroplating process. When the solar cell plate 200 travels to a point where the first electroplating bath 10 is not covered, the solar cell plate 200 covers the second electroplating bath 10 while covering a part of the third electroplating bath 10. In this way, a single electroplating bath 10 is large in electroplating area against the solar cell plate 200, which can improve the electroplating efficiency of a single electroplated region. Only a small number of electroplating baths 10 are required to make the thickness of an electroplated layer reach the desired value, thereby simplifying the structure of the equipment and reducing the cost and the failure rate.

In some embodiments, in the horizontal direction, a ratio of the spacing between the first side wall 11 and the second side wall 12 of the same electroplating bath 10 to the length of the solar cell plate 200 in the horizontal direction is greater than 0.5 and less than 1, for example, 0.6, 0.65, 0.7, 0.75, 0.8, 0.85, 0.9, 0.95 or any value greater than 0.5 and less than 1.

Further, in such embodiments, the ratio is preferably 0.5 to 0.8. Particularly, inventors found in production practices that if the ratio of the spacing between the first side wall 11 and the second side wall 12 of the same electroplating bath 10 to the length of the solar cell plate 200 in the horizontal direction is small (less than 0.5), one cell plate covers two electroplating baths, resulting in low electroplating efficiency and more complex structure of the equipment.

If the ratio of the spacing between the first side wall 11 and the second side wall 12 of the same electroplating bath 10 to the length of the solar cell plate 200 in the horizontal direction is large, there is a probability that one end of the solar cell plate 100 facing the transporting direction is engaged against the second side wall 12 of the electroplating bath 10 in a process of transporting the solar cell plate 200, which seriously affects the production efficiency. Particularly, taking Fig. 2 as an example, the solar cell plate 200 is moved from left to right along the horizontal direction as shown in Fig. 2, and the solar cell plate 200 has a left end and a right end opposite to the left end. On the one hand, due to accidental factors in a production process, such as pause of a transmission or a non-uniform motion of the solar cell plate 200 for a short period of time or accidental vibration of a machine, when the accidental factors (for example, the pause of the transmission) occur, if a right end of a certain solar cell plate 200 is close to the second side walls 12 of the electroplating baths 10, then the right end of the solar cell plate 200 is displaced diagonally downwards due to inertia and gravity. In such a case, if the ratio of the spacing between the first side wall 11 and the second side wall 12 of the corresponding electroplating bath 10 to the length of the solar cell plate 200 in the horizontal direction is large (greater than 0.8), for example, greater than 0.8 and less than 1, that is, less than 1 but very close to 1, the diagonally-downward displacement is easily produced, which is prone to the engagement of the right end of the solar cell plate 100 against the second side walls 12 of the electroplating baths 10.

On the other hand, the electroplating solutions are adsorbed on the solar cell plate 200. A downward adsorption force is produced on the solar cell plate 200 due to a surface tension of the electroplating solutions. Due to this adsorption force, if the ratio of the spacing between the first side wall 11 and the second side wall 12 of the corresponding electroplating bath 10 to the length of the solar cell plate 200 in the horizontal direction is large, the solar cell plate 200 tends to slightly downwards bend or tilt under an action of the adsorption force, resulting in the engagement of the solar cell 200 against the second side walls 12 of the electroplating baths 10.

Moreover, if the ratio between the spacing between the first side wall 11 and the second side wall 12 of the corresponding electroplating bath 10 to the length of the solar cell plate 200 in the horizontal direction is large, a portion protruding from the second side wall 12 is short, which easily causes the solar cell plate 200 to be incapable of being in contact with the conveying device 20 within the latter electroplating bath 10 when the solar cell plate 200 travels, resulting in a phenomenon that the solar cell plate 200 can not travel continuously.

In view of this, inventors of the present disclosure found after performing research and verification that when the ratio of the spacing between the first side wall 11 and the second side wall 12 of the same electroplating bath 10 to the length of the solar cell plate 200 in the horizontal direction is preferably set within a range of 0.5 to 0.8, it is possible for preventing one end of the solar cell plate 100 facing the transporting direction from being engaged against the second side walls 12 of the electroplating baths 10 while improving the electroplating efficiency, and further for ensuring the reliability that the solar cell plate 200 can continuously travel.

In some embodiments, in the horizontal direction, the ratio of the spacing between the first side wall 11 of the previous electroplating bath 10 and the second side wall 12 of the latter electroplating bath 10 in two adjacent electroplating baths 10 to the length of the solar cell plate 200 in the horizontal direction is greater than 1 and less than 2, for example, 1.2, 1.3, 1.4, 1.5, 1.6, 1.7, 1.8, 1.9, or any value greater than 1 and less than 2.

Further, in such embodiments, the ratio is preferably 1.2 to 1.6. Particularly, inventors found in production practices that if the ratio between the spacing between the first side wall 11 of the previous electroplating bath 10 and the second side wall 12 of the latter electroplating bath 10 in two adjacent electroplating baths 10 to the length of the solar cell plate 200 in the horizontal direction is small (that is, less than 1.2), the solar cell plate 200 can not be in contact with the conveying device 20 within the latter electroplating bath 10 when the solar cell plate 200 travels in a process of transporting the solar cell plate 200, resulting in a phenomenon that the solar cell plate 200 can not travel continuously.

Moreover, if the ratio between the spacing between the first side wall 11 of the previous electroplating bath 10 and the second side wall 12 of the latter electroplating bath 10 in two adjacent electroplating baths 10 to the length of the solar cell plate 200 in the horizontal direction is large (that is, greater than 1.6), as described above, the solar cell plate 200 can be moved from left to right along the horizontal direction in the process of transporting the solar cell plate 200 as shown in Fig. 1. The solar cell plate 200 has the left end and the right end opposite to the left end. Due to the accidental factors in the production process, such as pause of the transmission or the non-uniform motion of the solar cell plate 200 for a short period of time or accidental vibration of the machine, when the accidental factors (e.g., the pause of the transmission) occur, if the right end of a certain solar cell plate 200 is close to the second side wall 12 of the latter electroplating bath 10, the right end of the solar cell plate 200 is displaced diagonally downwards due to inertia, gravity and the adsorption force generated by the electroplating solutions.

In such a case, if the ratio of the spacing between the first side wall 11 of the previous electroplating bath 10 and the second side wall 12 of the latter electroplating bath 10 to the length of the solar cell plate 200 in the horizontal direction is large (greater than 1.6), for example, greater than 1.6 and less than 2, that is, less than 2 but very close to 2, the diagonally-downward displacement is easily produced, which is prone to the engagement of the right end of the solar cell plate 100 against the second side wall 12 of the latter electroplating bath 10.

In view of this, inventors of the present disclosure found after performing research and verification that when the ratio of the spacing between the first side wall 11 of the previous electroplating bath 10 and the second side wall 12 of the latter electroplating bath 10 to the length of the solar cell plate 200 in the horizontal direction is preferably designed within a range of 1.2 to 1.6, it is possible for preventing one end of the solar cell plate 100 facing the transporting direction from being engaged against the second side wall 12 of the latter electroplating bath 10 while ensuring the reliability that the solar cell plate 200 can continuously travel.

Referring to Fig. 1, in some embodiments, a number of the cathode structures 40 and a number of the electroplating baths 10 are alternately successively disposed along the horizontal direction, and in the horizontal direction, a spacing between the Nth cathode structure 40 and the (N+1)^{th} cathode structure 40 is less than the length of the solar cell plate 200, wherein N is a positive integer.

In some embodiments, one cathode structure 40 may be provided between two adjacent electroplating baths 10, one cathode structure 40 may be provided before the initial electroplating bath 10, and one cathode structure 40 may be provided or no cathode structure may be provided after the final electroplating bath 10.

As such, the solar cell plate can be in contact with the at least one cathode structure 40 regardless of a state of the solar cell plate 200 in a travelling process, which ensures the electroplating reliability.

Certainly, it should be understood that in some embodiments, in a number of the electroplating baths 10, there may be a case where no cathode structure 40 is provided between two electroplating baths 10. That is, in some embodiments, the number of the electroplating baths 10 may be greater than two. In the horizontal electroplating equipment 100, no cathode structure 40 is provided between some adjacent electroplating baths 10. For example, one cathode structure 40 can be disposed between the first electroplating bath 10 and the second electroplating bath 10, no cathode structure 40 can be provided between the second electroplating bath 10 and the third electroplating bath 10, and one cathode structure 40 can be provided between the third electroplating bath 10 and the fourth electroplating bath 10, which is not particularly limited herein. It is only necessary for the solar cell 200 to remain in contact with at least one cathode structure 40 in the electroplating process in order to form the circuit loop.

Again, it should be understood that in further embodiments, two cathode structures 40 or two or more cathode structures 40 can be provided between some electroplating baths 10, which is not particularly limited herein. It is necessary for ensuring that the spacing D2 between the first side wall 11 of the M^{th} electroplating bath 10 and the first side wall 11 of the (M+1)^{th} electroplating bath 10 is less than the length D1 of the solar cell plate, the spacing D3 between the first side wall 11 of the M^{th} electroplating bath 10 and the second side wall 12 of the (M+1)^{th} electroplating bath 10 is greater than the length D1 of the solar cell plate, and the solar cell plate 200 can remain in contact with the at least one cathode structure 40 in the electroplating and travelling processes in order to form the circuit loop.

Further, in some embodiments, the spacings between side walls of the first side walls 11 and the second side walls 12 closest to the cathode structures 40 and the cathode structures 40 range from 1mm to 20mm.

As such, it is possible to prevent an electroplated layer from being electroplated on the cathode structure 40 since the electroplating solution overflows and sputters onto the cathode structure 40 because the cathode structure 40 is too close to the first side wall 11 and the second side wall 12.

Particularly, in such embodiments, the spacing between the side walls of the first side walls 11 and the second side walls 12 closest to the cathode structures 40 and the cathode structures 40 may be for example 1mm, 2mm, 3mm, 4mm, 5mm, 6mm, 7mm, 8mm, 9mm, 10mm, 11mm, 12mm, 13mm, 14mm, 15mm, 16mm, 17mm, 18mm, 19mm, 20mm, or any value between 1mm and 20mm, which is not particularly limited herein.

It should be understood that only the first side walls 11 are provided at two sides of the cathode structure 40 located at an initial position. In such a case, the spacing refers to a spacing between the cathode structure 40 and the first side walls 11. Only the first side walls 11 are provided at two sides of the cathode structure 40 located at a final position. In such a case, the spacing refers to a spacing between the cathode structure 40 and the first side wall 11s. The first side wall 11 and the second side wall 12 are provided at two sides of the cathode structure 40 between the two electroplating baths 10, respectively. In such a case, if the spacings between the two side walls and the cathode structure 40 are different, the spacings refer to a distance between the side wall of the two side walls closest to the cathode structure 40 and the cathode structure 40. If the spacings between the two side walls and the cathode structure 40 are the same, the spacings refer to distances between the two side walls and the cathode structure 40.

Referring to Fig. 1 to Fig. 3, in some embodiments, the anode structures 30 include anode plates, wherein the anode plates are provided with through grooves 31 thereon, and at least one portion of each of the conveying devices 20 is in contact with the solar cell plate 200 through the through grooves 31, enabling the conveying device 20 to carry and transport the solar cell plate 200 along the horizontal direction.

As such, the conveying devices 20 are allowed to pass through the anode plates by providing the through grooves 31 in the anode plates for supporting and transporting the solar cell plate 200, which may enable the anode plates to be disposed close to the solar cell plate 200. Therefore, a distance between the anode plates 30 and the solar cell plate 200 is shortened, such that the horizontal electroplating equipment 100 is available for high-current electroplating with reduced current loss and improved electroplating efficiency while making electroplating more uniform.

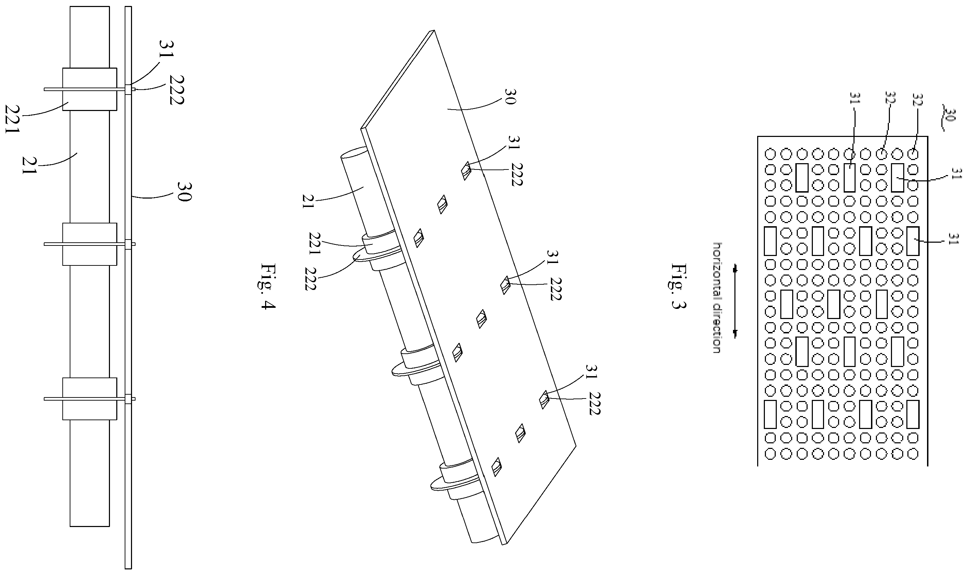

Further, as shown in Fig. 3, in some embodiments, a number of through holes 32 can be provided in the anode structures 30, such that the anode structures 30 form a mesh structure, that is, the anode structures 30 are mesh plates provided with a number of through grooves 31. In this way, providing the through holes 32 can facilitate the passage of the electroplating solutions, which prevents the anode structures 30 from blocking the electroplating solution, and results in poor flow and circulation of the electroplating solutions.

Further, as shown in Fig. 1 and Fig. 2, in some embodiments, electroplating solution surging devices 50 can be arranged within the electroplating baths 10, and can be devices such as waterjets. The electroplating solution surging devices 50 can make the electroplating solutions in the electroplating baths 10 continuously surge and tumble, such that the electroplating solutions can be continuously in contact with the solar cell plate 200, thereby forming the stable circuit loop and improving the electroplating uniformity.

Referring to Fig. 1 and Fig. 2, in some embodiments, in the vertical direction, a distance L1 between supporting points where the conveying devices 20 are in contact with the solar cell plate 200 and the anode structures 30 is less than or equal to 10mm.

As such, it is possible for preventing the electroplating efficiency from being reduced due to large distance L1 between the anode structures 30 and a to-be-electroplated surface of the solar cell plate 200.

Further, in such embodiments, in the vertical direction, the distance L1 between the supporting points where the conveying devices 20 are in contact with the solar cell plate 200 and the anode structures 30 is greater than 5mm and less than or equal to 10mm, that is, 5mm<L1≤10mm.

It is easy to understand that if the distance between the anode structures 30 and the to-be-electroplated surface of the solar cell plate 200 is large, the resistance of the electroplating solutions increases in the formed circuit loop, causing the electroplating solutions to consume part of the current, which affects the electroplating efficiency and the electroplating uniformity. If the distance is small, the flow and circulation of the electroplating solutions between the anode structures 30 and a to-be-electroplated cell plate are poor, which affects the electroplating uniformity.

In such embodiments, the distance L1 between the supporting points where the conveying devices 20 are in contact with the solar cell plate 200 and the anode structures 30 is set within such a preferred range, such that it is possible to avoid a situation where the distance between the anode structures 30 and the to-be-electroplated surface of the solar cell plate 200 is large, which would result in reduced electroplating efficiency and poor electroplating uniformity, and further to prevent poor flow and circulation of the electroplating solutions between the anode structures 30 and the solar cell 200 due to insufficient distance, which affects the electroplating uniformity, that is, can further improve the electroplating uniformity.

Particularly, in such embodiments, the distance L1 between the supporting points where the conveying devices 20 are in contact with the solar cell plate 200 and the anode structures 30 may be for example 5.1mm, 5.5mm, 6mm, 6.5mm, 7mm, 8mm, 8.5mm, 9mm, 9.5mm, 10mm, or any value greater than 5mm and less than or equal to 10mm, which is not particularly limited herein.

Referring to Fig. 2, Fig. 4 and Fig. 5, in some embodiments, the conveying devices 20 may include drive shafts 21 and drive wheels 22. The drive shafts 22 are rotatably installed on the electroplating baths 10. The drive wheels 22 are installed on the drive shafts 21 and positioned within the electroplating baths 10. The drive wheels 22 are in contact with the solar cell plate 200 through the through grooves 31 and are rotatable within the through grooves 31. The drive shafts 21 are configured to drive the drive wheels 22 to rotate to transport the solar cell plate 200.

As such, the solar cell plate 200 can be supported and transported only by making the drive wheels 22 to pass through the through grooves 31, while the anode structures 30 can be arranged closer to the solar cell plate 200 without interfering with the rotation of the drive wheels 22.

Particularly, in such embodiments, the drive shafts 21 can be connected to a drive mechanism including a motor. The drive mechanism may include the motor, an intermediate drive mechanism and the like. The drive mechanism can drive the drive shafts 21 to rotate so as to drive the drive wheels 22 to rotate within the through grooves 31 and further transport the solar cell plate 200.

In such embodiments, the drive wheels 22 can be installed separately with the drive shafts 21, that is, the drive wheels 22 can be separately installed on the drive shafts 21. Certainly, in further embodiments, the drive wheels 22 and the drive shafts 21 can be integrally formed, which is not particularly limited herein.

Further, referring to Fig. 4 to Fig. 7, in some embodiments, a plurality of drive wheels 22 can be arranged on the drive shafts 21, disposed at intervals along axial directions of the drive shafts 21, and are in one-to-one correspondence to the through grooves 31.

As such, the number of the supporting points for the solar cell plate 200 can be increased by arranging the plurality of drive wheels 22 on the drive shafts, thereby improving the stability of transporting the solar cell plate 200. Moreover, a plurality of solar cell plates 200 can be transported simultaneously by additionally providing the drive wheels 22.

Particularly, in such embodiments, the number of the drive wheels 22 on a single drive shaft 21 can be selected according to a length of the solar cell plate 200 in the axial directions of the drive shafts 21, which is not particularly limited herein. In general, for the single drive shaft 21, at least two drive wheels 22 may be disposed below the single solar cell plate 200.

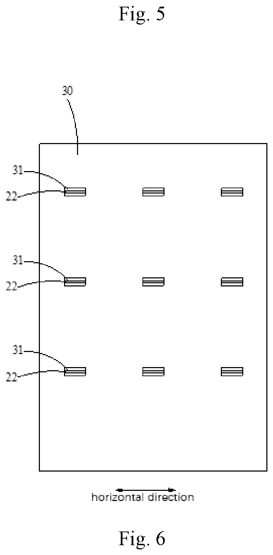

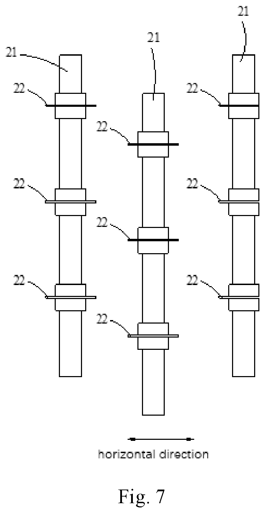

Referring to Fig. 6 and Fig. 7, in some embodiments, the plurality of drive shafts 21 are arranged within the electroplating baths 10, and disposed at intervals along the horizontal direction.

As such, by providing the plurality of spaced drive shafts 21 in the horizontal direction, the solar cell plate 200 can be more stably supported and transported in the horizontal direction.

Particularly, in such embodiments, the number of the drive shafts 21 within the electroplating baths 10 can be selected according to the length of the solar cell plate 200 in the horizontal direction, preferably, at least two drive shafts 21 are arranged below the solar cell plate 200.

Further, referring to Fig. 3 and Fig. 7, in some embodiments, the drive wheels on the at least two drive shafts 21 are misaligned with each other in the horizontal direction.

As such, it is possible for preventing regions where the solar cell plate 200 is in contact with the drive wheels 22 in a travelling process from being the same region, and further for preventing the solar cell plate 200 from being imprinted or even damaged when the same region of the solar cell plate 200 is repeatedly in contact and friction with the drive wheels 22.

It should be noted that in this context, "the drive wheels 22 are misaligned with each other in the horizontal direction" refers to that the two drive wheels are not positioned on the same horizontal line in the horizontal direction. For example, considering a case where only two drive shafts 21 are arranged within the electroplating bath 10 as an example. On one of the drive shafts 21, the drive wheels 22 on the drive shaft 21 are arranged at intervals along the axial directions of the drive shafts 21. On the other one of the drive shafts 21, the drive wheels 22 on the drive shaft 21 are arranged at intervals along the axial directions of the drive shafts 21 as well. However, the drive wheels 22 on the drive shaft 21 and the drive wheels on the previous drive shaft 21 are misaligned in the horizontal direction. That is, positions where the drive wheels 22 on the two drive shafts 21 are in contact with the solar cell plate 200 are not the same position.

Referring to Fig. 4 to Fig. 7, in some embodiments, the drive wheels 22 include rotating shaft portions 221 disposed on the drive shafts 21 and at least one blade portion 222 disposed on the rotating shaft portions 221. The blade portions 222 extend along radial directions of the rotating shaft portions 221. The blade portions 222 are in contact with the solar cell plate 22 through the through grooves 31 for carrying and transporting the solar cell plate 200.

As such, the drive wheels 22 are in contact with the solar cell plate 200 through the blade portions 222, with small contact area. It is possible to avoid a case where the contact area is large, which affects the contact of the electroplating solutions with the solar cell plate.

Particularly, in such embodiments, the blade portions 222 can be formed separately from the rotating shaft portions 221, or be formed integrally with the rotating shaft portions, which is not particularly limited herein

Referring to Fig. 1 and Fig. 2, in some embodiments, the cathode structures 40 can include cathode wheels 41, wherein the cathode wheels 41 and the conveying devices 20 are positioned on one side of the solar cell plate 200 facing the electroplating baths 10, the cathode wheels 41 are configured to carry the solar cell plate 200 together with the conveying devices 20, and the cathode wheels 41 are in contact with the solar cell plate 200 and are connected to a cathode of an external power supply. As shown in Fig. 1, in the horizontal direction, a spacing D4 between axle centers of the N cathode wheel 41 and the (N+1)^{th} cathode wheel 41 is less than the length D1 of the solar cell plate 200.

As such, the cathode structures 40 are provided as the cathode wheels 41, which can be configured to carry the solar cell plate 200 together with the conveying devices 20 while acting as the cathode, so as to reuse the functions. Moreover, the spacing D4 between the axle centers of the Nth cathode wheel 41 and the (N+1)^{th} cathode wheel 41 is less than the length D1 of the solar cell plate 200, which may enable the solar cell plate 200 to be in contact with the at least one cathode wheel 41 regardless of the state of the solar cell plate 200, thereby forming the circuit loop.

Particularly, in such embodiments, the cathode wheels 41 being in contact with the solar cell plate 200 can involve the cathode wheels 41 being in direct electrical contact with the to-be-electroplated region, or the cathode wheels 41 being in contact with the mask. The cathode wheels 41 are in electrical contact with the to-be-electroplated region by the electroplating solutions attached to the solar cell plate 200, which is not particularly limited herein.

In some embodiments, the cathode wheels 41 can have a diameter of 30mm to 40mm. As such, it is possible to avoid a case where the cathode wheels 41 have the large diameter, resulting in reduced electroplating efficiency. Moreover, the diameter of the cathode wheels 41 is set within this range in a case where the spacings between adjacent electroplating baths 10 are constant, which can prevent the spacing between the cathode wheels 41 and the first side walls 11 and the second side walls 12 from being small, resulting in sputtering of the electroplating solutions onto the cathode wheels 41 and further in electroplating of electroplated layers on the cathode wheels 41.

In some embodiments, the cathode wheels 41 can be fixed relative to the electroplating baths 10. In such a case, the cathode wheels 41 only act as the cathode and play a role of carrying the solar cell plate 200.

It is easy to understand that in such embodiments, the cathode wheels 41 can be prevented from scratching or even damaging the solar cell plate 200 in the travelling process of the solar cell plate 200 by controlling a friction force between the cathode wheels 41 and the solar cell plate 200.

Certainly, in some embodiments, in order to prevent the cathode wheels 41 from seriously scratching the solar cell plate 200, the cathode wheels 41 can be configured to be rotatable relative to the electroplating baths 10. In this way, the cathode wheels 41 can rotate freely, and the cathode wheels 41 is in rolling friction with the solar cell plate 200, with small friction force.

Further, in some embodiments, the cathode wheels 41 are rotatable relative to the electroplating baths 10 and are configured to transport the solar cell plate 200 together with the conveying devices 20.

As such, the cathode wheels 41 can be connected to the drive mechanism of the horizontal electroplating equipment 100 like the conveying devices 20. The cathode wheels 41 are rotatable under the drive of the drive mechanism so as to transport the solar cell plate 200 together with the conveying devices 20 along the horizontal direction, that is, the reuse of the functions of acting as the cathode and playing the role of transporting the solar cell plate is achieved by providing the cathode wheels 41.

In some embodiments, in the horizontal direction, a distance L2 between the supporting points between the conveying devices 20 and the solar cell plate 200 closest to the cathode wheels 41 (that is, shaft centers of the drive shaft 21 closest to the cathode wheels 41) and the axle centers of the cathode wheels 41 is less than or equal to half of the length of the solar cell plate 200.

As such, it is possible for preventing the solar cell plate 200 from easily deforming due to large length of a portion of the solar cell plate 200 between the supporting points where the conveying devices 20 are in contact with the solar cell plate 200 and the axle centers of the cathode wheels 41, and further for preventing the solar cell plate 200 from being damaged due to the contact of the solar cell plate 200 with tops of the electroplating baths 10 below the solar cell plates 200.

Particularly, it is easy to understand that if the distance L2 between the cathode wheels 41 and the supporting points between the conveying devices 20 and the solar cell plate 200 closest to the cathode wheels 41 is large, then in the travelling process, the length of the solar cell plate 200 between the cathode wheels 41 and the supporting points is large, which makes the solar cell plate 200 easily deform downwards due to bending. In such a case, the solar cell plate 200 is damaged since the solar cell plate 200 is easily in contact with tops of notches of the electroplating baths 10. Controlling such a distance to be less than or equal to half of the length of the solar cell plate 200 can effectively avoid the problem.

referring to Fig. 1 and Fig. 2, in some embodiments, in the vertical direction, the supporting points where the conveying devices 20 are in contact with the solar cell plate 200 are higher than tops of the first side wall 11 and the second side wall 12.

As such, it is possible for preventing the solar cell plate 200 from being broken or even damaged due to the scratching occurring between the solar cell plate 200 and the first side walls 11 and the second side walls 12. Moreover, the first side walls 11 and the second side walls 12 are disposed at lower positions, such that the electroplating solutions can overflow from the first side walls 11 and the second side walls 12 under the action of the electroplating solution surging devices 50.

Further, in such embodiments, in the vertical direction, a distance L3 between the supporting points where the conveying devices 20 are in contact with the solar cell plate 200 and the tops of the first side walls 11 and the second side walls 12 ranges from 1mm to 2mm.

As such, it is possible to avoid a case where the electroplating solution can not be in continuous and stable contact with the solar cell plate 200 due to large distance between the maximum liquid level of the electroplating solutions and the solar cell plate 200 since the distance between the supporting points and the tops of the first side walls 11 and the second side walls 12 is large, and further to prevent the solar cell plate 200 from being in contact with the first side walls 11 or the second side walls 12 accidentally due to small distance between the supporting points and the tops of the first side walls 11 or the second side walls 12.

Particularly, in such embodiments, in the vertical direction, the distance between the supporting points where the conveying devices 20 are in contact with the solar cell plate 200 and the tops of the first side walls 11 and the second side walls 12 may be for example 1mm, 1.2mm, 1.4mm, 1.6mm, 1.8mm, 2mm, or any value between 1mm and 2mm, which is not particularly limited herein.

In the description of this specification, reference terms such as "one embodiment", "some embodiments", "examples", "specific examples", or "some examples" mean that particular features, structures, materials or features described in conjunction with the embodiments or examples described are included in at least one embodiment or example of the present disclosure. In this specification, schematic representations of the above terms do not necessarily refer to the same embodiments or example. Furthermore, the particular features, structures, materials, or features described may be combined in any one or more embodiments or examples in a proper manner.

Although the embodiments of the present disclosure have been shown and described, it should be appreciated by those ordinarily skilled in the art that a variety of variations, modifications, substitutions and variants may be made to the embodiments without departing from the principle and spirit of the present disclosure, and the scope of the present disclosure is defined by the claims and their equivalents.

## Claims

1. Horizontal electroplating equipment for a solar cell plate, comprising:
a number of electroplating baths arranged at intervals along a horizontal direction and comprising first side walls and second side walls opposite to the first side walls at intervals along the horizontal direction;
conveying devices arranged within the electroplating baths and configured to carry and transport the solar cell plate along the horizontal direction;
anode structures arranged within the electroplating baths;
a number of cathode structures disposed outside the electroplating baths, wherein the solar cell plate remains in contact with at least one of the cathode structures in an electroplating process; and
wherein a spacing between the first side wall of the M^{th} electroplating bath and the first side wall of the (M+1)^{th} electroplating bath is less than a length of the solar cell plate, and a spacing between the first side wall of the M^{th} electroplating bath and the second side wall of the (M+1)^{th} electroplating bath is greater than the length of the solar cell plate, wherein M is a positive integer.

2. The horizontal electroplating equipment for the solar cell plate according to claim 1, wherein a number of the cathode structures and a number of the electroplating baths are alternately successively disposed along the horizontal direction; and in the horizontal direction, a spacing between the Nth cathode structure and the (N+1)^{th} cathode structure is less than the length of the solar cell plate, wherein N is a positive integer.

3. The horizontal electroplating equipment for the solar cell plate according to claim 2, wherein a spacing between side walls of the first side walls and the second side walls closest to the cathode structures and the cathode structures ranges from 1mm to 20mm.

4. The horizontal electroplating equipment for the solar cell plate according to claim 2, wherein the cathode structures comprise cathode wheels, wherein the cathode wheels and the conveying devices are positioned on one side of the solar cell plate facing the electroplating baths, the cathode wheels are configured to carry the solar cell plate together with the conveying devices, the cathode wheels are in contact with the solar cell plate and are connected to a cathode of an external power supply, and in the horizontal direction, a spacing between axle centers of the N cathode wheel and the (N+1)^{th} cathode wheel is less than the length of the solar cell plate.

5. The horizontal electroplating equipment for the solar cell plate according to claim 4, wherein the cathode wheels have a diameter of 30mm to 40mm.

6. The horizontal electroplating equipment for the solar cell plate according to claim 4, wherein in the horizontal direction, a distance between supporting points between the conveying devices and the solar cell plate closest to the cathode wheels and the axle centers of the cathode wheels is less than or equal to half of the length of the solar cell plate.

7. The horizontal electroplating equipment for the solar cell plate according to claim 1, wherein the number of the electroplating baths is greater than two, and no cathode structures are provided between some adjacent ones of electroplating baths in the horizontal electroplating equipment.

8. The horizontal electroplating equipment for the solar cell plate according to claim 1, wherein the anode structures comprise anode plates, wherein the anode plates are provided with through grooves thereon, and at least one portion of each of the conveying devices is in contact with the solar cell plate through the through grooves, enabling the conveying device to carry and transport the solar cell plate along the horizontal direction.

9. The horizontal electroplating equipment for the solar cell plate according to claim 8, wherein the conveying devices comprise drive shafts and drive wheels, wherein the drive shafts are rotatably installed on the electroplating baths, the drive wheels are disposed on the drive shafts and positioned within the electroplating baths, the drive wheels are in contact with the solar cell plate through the through grooves and are rotatably positioned within the through grooves, the drive wheels are configured to carry the solar cell plate, and the drive shafts are configured to drive the drive wheels to rotate to transport the solar cell plate.

10. The horizontal electroplating equipment for the solar cell plate according to claim 8, wherein in a vertical direction, a distance between supporting points where the conveying devices are in contact with the solar cell plate and the anode plates is less than or equal to 10mm.

11. The horizontal electroplating equipment for the solar cell plate according to claim 10, wherein in the vertical direction, the distance between the supporting points where the conveying devices are in contact with the solar cell plate and the anode plates is greater than 5mm and less than or equal to 10mm.

12. The horizontal electroplating equipment for the solar cell plate according to claim 9, wherein a plurality of the drive wheels are arranged on the drive shafts, are disposed at intervals along axial directions of the drive shafts, and are in one-to-one correspondence to the through grooves.

13. The horizontal electroplating equipment for the solar cell plate according to claim 9, wherein a plurality of the drive shafts are arranged within the electroplating baths, a plurality of the drive shafts are disposed at intervals along the horizontal direction, and the drive wheels on at least two ones of the drive shafts are misaligned with each other in the horizontal direction.
